# EUROPEAN PATENT APPLICATION

(11) **EP 4 149 131 A1**
(43) Date of publication of application: **15.03.2023**
(21) Application number: 20934557.8
(22) Date of filing: 08.05.2020
(51) Int. Cl.: H04W 8/22

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); TAKAHASHI, Hideaki, Tokyo 100-6150 (JP); NAGATA, Satoshi, Tokyo 100-6150 (JP)
(74) Representative: Hoffmann Eitle
(86) International application number: PCT/JP2020/018727
(87) International publication number: WO 2021/224998

(57) **Abstract**

A terminal according to an aspect of the present disclosure has: a control section that, when a plurality of channel state information (CSI) codebook types are supported, controls reporting of a first terminal capability for each CSI codebook type and a second terminal capability for a combination of the CSI codebook types; and a transmitting section that transmits terminal capability information including the first terminal capability and the second terminal capability.

## Description

### Technical Field

The present disclosure relates to a terminal, a radio communication method, and a base station in next-generation mobile communication systems.

### Background Art

In the universal mobile telecommunications system (UMTS) network, the specifications of long term evolution (LTE) have been drafted for the purpose of further increasing data rates, providing low delays, and so on (Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

Rel. 15 NR supports reporting UE capability information regarding resources/ports of a reference signal (for example, CSI-RS) for channel state information (CSI) from a UE to a network.

For example, the UE reports information regarding the number of CSI-RS resources/the number of ports for each CSI codebook type, for each band, or for each combination of a plurality of bands (band combination (BC)) as UE capability information. The network (for example, a base station) controls the configuration of CSI-RS resources/ports on the basis of information reported from the UE (or a parameter).

In a future radio communication system, when the UE supports a plurality of CSI codebook types, it is assumed that the UE reports the UE capability (for example, the CSI codebook cap.) on a CSI codebook assuming that one or more CSI codebook types are configured. However, in such a case, how to control reporting of the UE capability for the CSI codebook has not been sufficiently studied.

Therefore, an object of the present disclosure is to provide a terminal, a radio communication method, and a base station capable of appropriately reporting UE capability information.

### Solution to Problem

A terminal according to one aspect of the present disclosure includes: a control section that, when a plurality of channel state information (CSI) codebook types are supported, controls reporting of a first terminal capability for each CSI codebook type and a second terminal capability for a combination of CSI codebook types; and a transmitting section that transmits terminal capability information including the first terminal capability and the second terminal capability.

### Advantageous Effects of Invention

According to one aspect of the present disclosure, UE capability information can be appropriately reported.

### Brief Description of Drawings

Fig. 1 is a diagram illustrating an example of parameters related to a CSI-RS reported by a UE for each band.
Fig. 2 is a diagram illustrating an example of parameters related to a CSI-RS reported by a UE for each BC.
Fig. 3 is a diagram illustrating an example of an active period of a CSI-RS.
Fig. 4 is a diagram illustrating an example of UE capability report control according to a first aspect.
Fig. 5 is a diagram illustrating an example of communication control between a UE and a network regarding UE capability information.
Fig. 6 is a diagram illustrating an example of UE capability report control according to a third aspect.
Fig. 7 is a diagram illustrating an example of content of UE-CapabilityTequestFilter notified to a UE by a network.
Fig. 8 is a diagram illustrating an example of UE capability information report control according to a fourth aspect.
Fig. 9 is a diagram illustrating another example of the UE capability information report control according to the fourth aspect.
Fig. 10 is a diagram illustrating another example of the UE capability information report control according to the fourth aspect.
Fig. 11 is a diagram illustrating an example of a schematic configuration of a radio communication system according to one embodiment.
Fig. 12 is a diagram illustrating an example of a configuration of a base station according to one embodiment.
Fig. 13 is a diagram illustrating an example of a configuration of a user terminal according to one embodiment.
Fig. 14 is a diagram illustrating an example of a hardware configuration of the base station and the user terminal according to one embodiment.

### Description of Embodiments

### (CSI Report or Reporting)

In Rel. 15 NR, a terminal (also referred to as a user terminal, user equipment (UE), or the like) generates (also referred to as determine, calculate, estimate, measure, or the like) channel state information (CSI) on the basis of a reference signal (RS) (or a resource for the RS), and transmits (also referred to as report, feedback, or the like) the generated CSI to a network (for example, a base station). The CSI may be transmitted to the base station by using a physical uplink control channel (PUCCH) or a physical uplink shared channel (PUSCH), for example.

The RS used for generating the CSI may be at least one of a channel state information reference signal (CSI-RS), a synchronization signal/physical broadcast channel (SS/PBCH) block, a synchronization signal (SS), or a demodulation reference signal (DMRS), for example.

The CSI-RS may include at least one of non zero power (NZP) CSI-RS or CSI-interference management (CSI-IM). The SS/PBCH block may be a block including an SS and a PBCH (and a corresponding DMRS), and may be referred to as an SS block (SSB) or the like. The SS may include at least one of a primary synchronization signal (PSS) or a secondary synchronization signal (SSS).

The CSI may include at least one of parameters (CSI parameters) including a channel quality indicator (CQI), a precoding matrix indicator (PMI), a CSI-RS resource indicator (CRI), an SS/PBCH block resource indicator (SS/PBCH block indicator (SSBRI)), a layer indicator (LI), a rank indicator (RI), layer 1 reference signal received power (L1-RSRP), L1-reference signal received quality (RSRQ), an L1-signal-to-noise and interference ratio (or signal to interference plus noise ratio) (SINR), an L1-signal to noise ratio (SNR), or the like.

The UE may receive information (report configuration information) regarding CSI reporting and control the CSI reporting on the basis of the report configuration information. The report configuration information may be, for example, "CSI-ReportConfig" as an information element (IE) of radio resource control (RRC). Note that, in the present disclosure, the RRC IE may be rephrased as an RRC parameter, a higher layer parameter, or the like.

The report configuration information (for example, "CSI-ReportConfig" as the RRC IE) may include, for example, at least one of the following.
· Information regarding the type of the CSI reporting (report type information, for example, "reportConfigType" as the RRC IE)
· Information regarding one or more quantities of CSI (one or more CSI parameters) to be reported (report quantity information, for example, "reportQuantity" as the RRC IE)
· Information regarding an RS resource used to generate the quantity (the CSI parameter) (resource information, for example, "CSI-ResourceConfigId" as the RRC IE)
· Information regarding a frequency domain to be subjected to the CSI reporting (frequency domain information, for example, "reportFreqConfiguration" as the RRC IE)

For example, the report type information may indicate periodic CSI (P-CSI) reporting, aperiodic CSI (A-CSI) reporting, or semi-permanent (semi-persistent) CSI (SP-CSI) reporting.

In addition, the report quantity information may specify at least one combination of the CSI parameters (for example, CRI, RI, PMI, CQI, LI, L1-RSRP, and the like).

Further, the resource information may be an ID of the RS resource. The RS resource may include, for example, a non zero power CSI-RS resource or SSB, and a CSI-IM resource (for example, a zero power CSI-RS resource).

The UE performs channel estimation by using the received RS, and estimates a channel matrix H. The UE feeds back an index (PMI) that is determined on the basis of the estimated channel matrix.

The PMI may indicate a precoder matrix (also simply referred to as a precoder) that is considered by the UE as being appropriate for downlink (DL) transmission to the UE. Each value of the PMI may correspond to one precoder matrix. A set of values of the PMI may correspond to a set of different precoder matrices that is called a precoder codebook (also simply referred to as a codebook).

In a space domain, the CSI reporting may include one or more types of CSI. For example, the CSI may include at least one of a first type (Type 1 CSI) used for selection of a single beam or a second type (Type 2 CSI) used for selection of multiple beams. The single beam may be rephrased as a single layer, and the multiple beams may be rephrased as a plurality of beams. The Type 1 CSI may not assume multiuser multiple input multiple output (MIMO), and the Type 2 CSI may assume the multiuser MIMO.

The codebook may include a codebook for the Type 1 CSI (also referred to as the Type 1 codebook or the like) and a codebook for the Type 2 CSI (also referred to as the Type 2 codebook or the like). In addition, the Type 1 CSI may include a Type 1 single-panel CSI and a Type 1 multi-panel CSI, and different codebooks (the Type 1 single-panel codebook and the Type 1 multi-panel codebook) may be defined.

In the present disclosure, Type 1 and Type I may be interchangeable. In the present disclosure, Type 2 and Type II may be interchangeable.

The type of uplink control information (UCI) may include at least one of hybrid automatic repeat request acknowledgement (HARQ-ACK), a scheduling request (SR), or CSI. The UCI may be carried on the PUCCH or the PUSCH.

The UE may report a list of supported CSI-RS resources for each CSI codebook type. For example, the UE reports information regarding the maximum number of transmission ports per resource, the maximum number of resources per band, and the total number of transmission ports per band (for example, {maxNumberTxPortsPerResource, maxNumberResourcesPerBand, totalNumberTxPortsPerBand}).

The maximum number of transmission ports per resource (maxNumberTxPortsPerResource) indicates the maximum number of transmission ports in the resource (for example, the maximum number of transmission ports that can be simultaneously configured in the CSI-RS resource). The maximum number of resources per band (maxNumberResourcesPerBand) indicates the maximum number of resources (for example, the maximum number of CSI-RS resources that can be simultaneously configured over all CCs) in all CCs (or cells) in the band. The total number of transmission ports per band (totalNumberTxPortsPerBand) indicates the total number of transmission ports in all CCs in the band (for example, the total number of transmission ports that can be simultaneously configured over all CCs). Note that the CCs correspond to CCs included in the band.

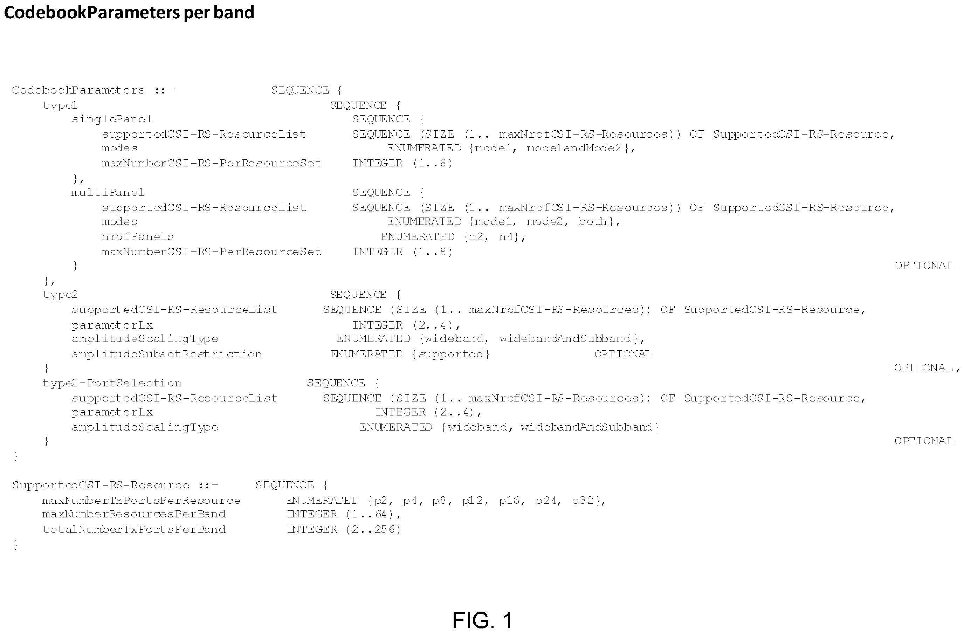

The UE may report codebook parameters (for example, codebookParameters) related to the codebook as band parameters (for example, BandNR parameters) for each band. The codebook parameters may indicate parameters corresponding to a codebook supported by the UE. The codebook parameters may include at least one of the following parameters (1) to (4) (Fig. 1). For example, (1) may be mandatory, and (2) to (4) may be optional. In addition, (3) and (4) may be collectively referred to as a type 2 codebook.
(1) Parameter of a type 1 single panel codebook (type1 singlePanel) supported by the UE
(2) Parameter of a type 1 multi-panel codebook (type1 multipanel) supported by the UE
(3) Parameter of a Type 2 codebook (type2) supported by the UE
(4) Parameter of a type 2 codebook (type2-PortSelection) including port selection supported by the UE

Each of the parameters (1) to (4) may include information regarding a list of CSI-RS resources supported by the UE (supportedCSI-RS-ResourceList). In addition, the information regarding the list of CSI-RS resources may include the following list of parameters described above.
· Maximum number of transmission ports per resource (maxNumberTxPortsPerResource)
· Maximum number of resources per band (maxNumberResourcesPerBand)
· Total number of transmission ports per band (totalNumberTxPortsPerBand)

The parameters (1) to (4) related to the codebooks reported by the UE may be referred to as FG2-36/2-40/2-41/2-43. The parameters {a first parameter (for example, maxNumberTxPortsPerResource), a second parameter (for example, maxNumberResourcesPerBand), and a third parameter (for example, totalNumberTxPortsPerBand)} included in the list of CSI-RS resources may be referred to as triplets, for example. The triplets may be replaced with a combination of parameters (or elements) included in the list of CSI-RS resources.

Further, the UE supporting a combination of a plurality of bands may report a predetermined parameter (for example, UE capability information) for each combination of bands. The combination of bands may also be referred to as a band combination (BC).

The predetermined parameter (for example, CA-ParametersNR or csi-RS-IM-ReceptionForFeedbackPerBandComb) may include a parameter (for example, maxNumberSimultaneousNZP-CSI-RS-ActBWP-AllCC) corresponding to the maximum number of CSI-RS resources in all CCs/active BWPs and a parameter (for example, totalNumberPortsSimultaneousNZP-CSI-RS-ActBWP-AllCC) corresponding to the total number of ports of CSI-RS resources in all CCs/active BWPs.

The parameter (for example, maxNumberSimultaneousNZP-CSI-RS-ActBWP-AllCC) corresponding to the maximum number of CSI-RS resources in all CCs/active BWPs indicates the maximum number of CSI-RS resources simultaneously configured over all CCs in the active BWPs. This parameter limits the total number of CSI-RS resources which NW can configure over all CCs. In addition to the limit notified by the maximum number of CSI-RS resources (for example, maxNumberSimultaneousNZP-CSI-RS-PerCC) for each CC, the NW may apply the limit.

The parameter (for example, totalNumberPortsSimultaneousNZP-CSI-RS-ActBWP-AllCC) corresponding to the total number of ports of CSI-RS resources in all CCs/active BWPs indicates the total number of ports of CSI-RS resources simultaneously configured over all CCs in the active BWPs. This parameter limits the total number of ports which NW can configure over all CCs. In addition to the limit notified by the total number of ports (for example, totalNumberPortsSimultaneous NZP-CSI-RS-PerCC) of CSI-RS resources for each CC, the NW may apply the limit.

The predetermined parameter (or a predetermined parameter reported for each BC) regarding the band combination (BC) reported by the UE may be referred to as FG2-33.

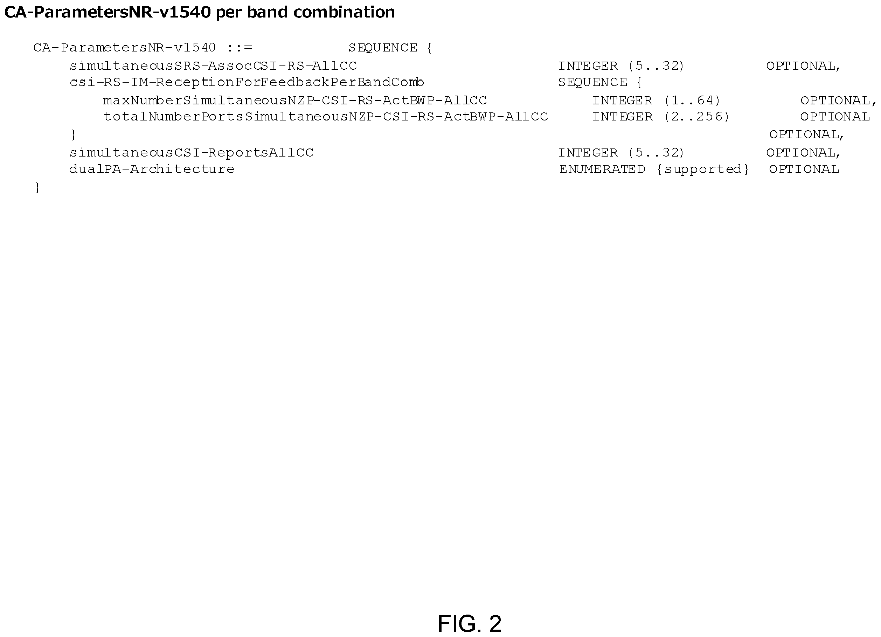

The UE may report parameters (for example, CodebookParameters)/triplets related to the codebook for each band (refer to Fig. 1 described above) and report a predetermined parameter (for example, CA-ParametersNR) for each BC (refer to Fig. 2). Alternatively, the triplets ({the first parameter (for example, maxNumberTxPortsPerResource), the second parameter (for example, maxNumberResourcesPerBand), and the third parameter (for example, totalNumberTxPortsPerBand)}) may be reported for each BC.

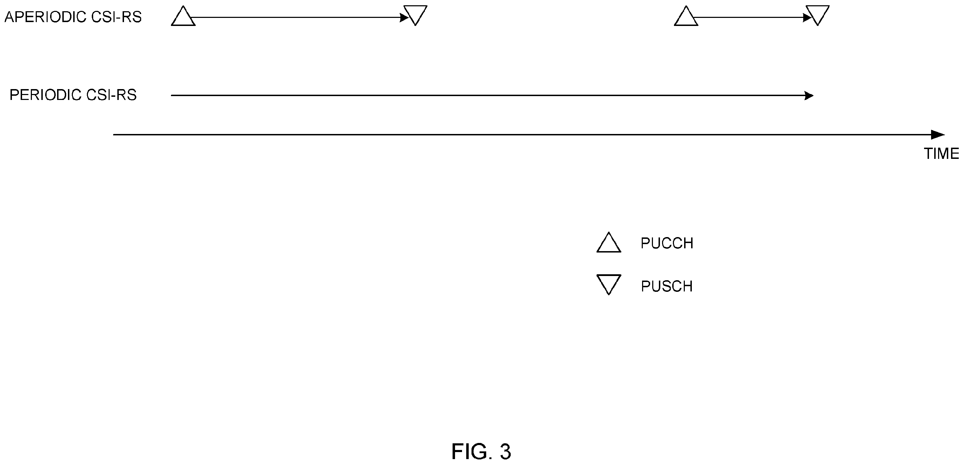

In the CSI processing criteria, the UE may not assume that it has the number of active CSI-RS ports or the number of active CSI-RS resources equal to or larger than the number reported as capability information in any slot. In a case of an aperiodic CSI-RS, a period from reception of the PDCCH including the CSI request (for example, a final symbol) to transmission of the PUSCH performing the CSI reporting (for example, a final symbol) becomes active in the CSI-RS (for example, NZP CSI-RS) resource (refer to Fig. 3). In a case of a periodic CSI-RS, a period from when the periodic CSI-RS is configured with higher layer signaling to when the CSI-RS is released becomes active in the CSI-RS (for example, NZP CSI-RS) resource.

As such, in a case where a plurality of CSI-RSs become simultaneously active, it may be replaced with that a plurality of CSIs are configured. Note that, even in a case where different CSI-RSs are transmitted in different periods (different symbol periods), respectively, when the different CSI-RSs are included in a predetermined period (for example, a slot), it may be determined that the different CSI-RSs become simultaneously active.

### (Configuration of CSI Codebook Type)

When a plurality of CSI codebook types are supported, it is conceivable that a UE shares a CSI process unit between the CSI codebook types. The UE controls communications using a common process unit for the different CSI codebook types. The UE sharing the CSI process unit between the CSI codebook types may have the same CSI processing capability within and between the CSI codebook types.

For example, a case is assumed in which the UE can support/configure a total of four ports when only the first CSI codebook type is configured, but can support/configure a total of two ports in the first CSI codebook type and a total of two ports (four ports in total) in the second CSI codebook type when the first CSI codebook type and the second CSI codebook type are simultaneously configured. For example, the first CSI codebook type may be a type 1 CSI codebook corresponding to Rel. 15, and the second CSI codebook type may be a type 2 CSI codebook corresponding to Rel. 16.

When MU-MIMO is performed, it is assumed that a type 2 CSI codebook is configured for the UE, but it is also conceivable that SU-MIMO is applied when a UE pair for scheduling a PDSCH cannot be appropriately selected. In such a case, it may be undesirable in terms of CSI overheads to cause the UE to report CSI corresponding to the type 2 CSI codebook.

The type 1 CSI codebook has less CSI overheads than the type 2 CSI codebook, but is less likely to obtain characteristics in MU-MIMO. The type 2 CSI codebook has larger CSI overheads than the type 1 CSI codebook, but is more likely to obtain characteristics in MU-MIMO.

Therefore, it is conceivable to configure a plurality of CSI codebook types (for example, the type 1 CSI codebook and the second CSI codebook) in the UE by using higher layer signaling or the like, and control the UE to report CSI corresponding to any type on the basis of a communication state.

As described above, when the UE supports one or more CSI codebook types, how to control reporting of the UE capability (for example, the CSI codebook cap.) for the CSI codebook becomes a problem.

Therefore, the present inventors have studied a method for reporting the UE capability for a CSI codebook when a specific CSI codebook type is independently configured, and have conceived one aspect of the present embodiment. Alternatively, the prevent inventors have studied a method for reporting the UE capability for a CSI codebook when a plurality of specific CSI codebook types are simultaneously configured, and have conceived one aspect of the present embodiment.

Hereinafter, embodiments according to the present disclosure will be described in detail with reference to the drawings. A radio communication method and each aspect according to each embodiment may be applied independently, or may be applied in combination with others. Note that, in the present disclosure, "A/B" may be replaced with "at least one of A or B".

In the following description, a port, a CSI-RS port, and a port for a CSI-RS resource may be replaced with each other. In addition, each band combination (BC) may be replaced with each CSI codebook type in addition to each BC.

In the following description, the maximum number of CSI-RS resources (for example, maxNumberResourcesPerBC) and the maximum number of CSI-RS resources in all CCs/active BWPs (for example, maxNumberSimultaneousNZP-CSI-RS-ActBWP-AllCC) may be replaced with each other. The total number of ports (for example, totalNumberTxPortsPerBC) and the total number of ports of CSI-RS resources in all CCs/active BWPs (for example, totalNumberPortsSimultaneousNZP-CSI-RS-ActBWP-AllCC) may be replaced with each other.

In the following description, a UE capability enquiry (for example, UECapabilityEnquiry) may be replaced with a UE capability RAT request list (for example, UE-CapabilityRAT-RequestList), a UE capability RAT request (for example, UE-CapabilityRAT-Request), a capabilityRequestFilter, a UE-CapabilityRequestFilterNR, or a CodebookParameterFilter.

### (First Aspect)

In a first aspect, a case of respectively reporting the UE capability (CSI codebook cap.) for a CSI codebook when a CSI codebook type is independently configured and the UE capability for a CSI codebook when a plurality of CSI codebook types are configured simultaneously will be described.

In the following description, as the CSI codebook type, the following first to fourth CSI codebook types are described as an example, but the number/content of applicable CSI codebook types is not limited thereto.
· First CSI codebook type: a type 2 codebook supported in Rel. 16 (for example, R16 Type 2).
· Second CSI codebook type: a type 1 single panel codebook supported in Rel. 15 (for example, R15 Type 1 single panel).
· Third CSI codebook type: a type 1 multi-panel codebook supported in Rel. 15 (for example, R15 Type 1 multi-panel).
· Fourth CSI codebook type: a type 2 codebook supported in Rel. 15 (for example, R15 Type 2).

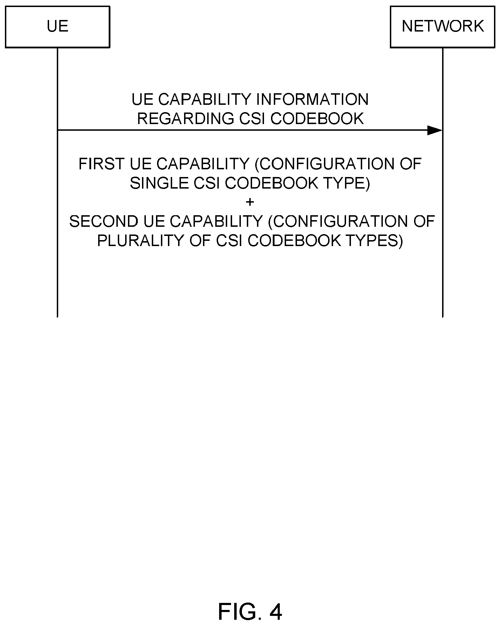

In addition to the UE capability (first UE capability) for CSI codebooks when a single CSI codebook type is configured, the UE may report the UE capability (second UE capability) for CSI codebooks when a plurality of CSI codebook types are configured simultaneously (refer to Fig. 4). Configuring the plurality of CSI codebook types simultaneously corresponds to a case in which there are a plurality of pieces of CSI (or a plurality of CSI-RSs) activated in a certain time unit (for example, a slot, a mini slot, or a subslot).

The UE capability (hereinafter, also referred to as the UE capability of a CSI codebook) for a CSI codebook may include, for example, at least triplets. For the CSI codebook, corresponding triplets may be reported for each band/BC.

For example, the UE may report the UE capability of the CSI codebook in a specific combination of CSI codebook types as the second UE capability. The specific combination of the codebook types may be a predetermined combination (for example, at least one of the following combinations #1 to #4).
· Combination #1: R16 Type 2 + R15 Type 1 single panel codebook
· Combination #2: R16 Type 2 + R15 Type 1 multi-panel codebook
· Combination #3: R16 Type 2 + R15 Type 2
· Combination #4: R15 Type 1 single panel + R15 Type 2 single panel

As the second UE capability, the UE may report the UE capability corresponding to each entire combination. Alternatively, as the second UE capability, the UE may report the UE capability corresponding to each CSI codebook type in each combination.

As described above, by reporting the UE capability when the single CSI codebook type is configured and the UE capability when the plurality of CSI codebook types are configured, it is possible to flexibly control CSI reported by the UE according to the number/content of CSI codebook types configured for the UE.

Alternatively, in a configuration in which the UE reports the UE capability (second UE capability) of CSI codebooks when the plurality of CSI codebook types are simultaneously configured, the plurality of CSI codebook types may be any one of the following combinations #A and #B.
· Combination #A: all CSI codebook types prescribed/defined until Rel. 16
· Combination #B: all CSI codebook types reported as being supported by the UE

That is, instead of reporting the UE capability of the CSI codebook for each combination, the UE may report the UE capability for one combination. In addition, as the second UE capability, the UE may report the UE capability corresponding to the entire combination #A or the entire combination #B, or may report the UE capability corresponding to each CSI codebook type in the combination #A or the combination #B.

### (Second Aspect)

A second aspect describes a case of reporting the UE capability for a CSI codebook when the CSI codebook type is independently configured. The second aspect may be applied in combination with the first aspect.

The UE may report the following UE capability #1 to UE capability #3 as the UE capability (first UE capability) of the CSI codebook when the CSI codebook type is independently configured.
· UE capability #1: triplets of CSI codebooks supported in Rel. 15 per band
· UE capability #2: triplets of CSI codebooks supported in Rel. 15 per band and per BC
· UE capability #3: triplets of Type 2 CSI codebooks supported in Rel. 16 per band/per BC

The UE may report the UE capability #1 per band for R15 Type 1 single panel, R15 Type 1 multi-panel, and R15 Type 2. The UE may report the UE capability #2 per band and per BC for R15 Type 1 single panel, R15 Type 1 multi-panel, and R15 Type 2. The UE may report the UE capability #3 per band/per BC for R16 Type 2.

### <UE Capability #3>

The UE may report a value corresponding to a case where the R16 type 2 is independently configured as the UE capability #3 (triplets included in the R16 type 2). In this case, the UE capability of the CSI codebook when the R16 type 2 and other CSI codebook types are configured at the same time may be reported as the second UE capability illustrated in the first aspect.

Alternatively, the UE may report the UE capability of the CSI codebook for R16 type 2 when the R16 type 2 and other CSI codebook types are configured at the same time as the UE capability #3 (triplets included in R16 type 2).

### <UE Capability #1/UE Capability #2>

When reporting is controlled by a definition of the UE capability in an existing system (for example, Rel. 15), the UE capability #1 and the UE capability #2 do not prescribe which one of a value in a case where each CSI codebook is independently configured and a value in a case where a plurality of CSI codebooks are configured simultaneously is applied as a reported value. In this case, the UE needs to report (underreport) a low value as a reported value corresponding to each CSI codebook type, assuming a worst case (for example, when a plurality of CSI codebooks are set at the same time,).

For example, the UE that has reported to support the R15 type 1 single panel and the R15 type 2 reports the UE capability of a CSI codebook corresponding to each CSI codebook type, assuming that the two supported CSI codebook types are configured at the same time.

Therefore, the UE may report the following UE capabilities (1) and (2) per CSI codebook type for the UE capability #1/UE capability #2.
(1) UE capability of a CSI codebook when each CSI codebook type is independently configured
(2) UE capability of a CSI codebook of a CSI codebook type when a plurality of CSI codebook types are simultaneously configured

Note that a predetermined UE may perform control so as not to report one of the UE capability (1) and the UE capability (2). For example, a UE that does not report the UE capability (concatenated CSI-codebook cap.) of a CSI codebook for a plurality of CSI codebook types may perform control so as not to report the UE capability (2).

### (Third Aspect)

In a third aspect, a case where the content/value of UE capability information (for example, UECapabilityInformation) to be reported to a network is determined on the basis of a notification from the network will be described.

### <UE Capability Information Report (UE Capability Report)>

In a radio communication system, a UE reports capability information of its own terminal to a network (for example, a base station or an operator) for each function used for communication. The UE capability information reported for each function is reported in various units such as per UE, per band, per band combination (per BC), and per band in the band combination (per band in BC).

The network controls radio communication (for example, transmission/reception) with each UE, on the basis of the capability information reported from the UE. On the other hand, even if UE capability information (for example, UE capability information or the like for a band that is not specified) not used in the radio communication system is reported to the network from the UE, the network cannot use the reported UE capability information, so that useless information is reported.

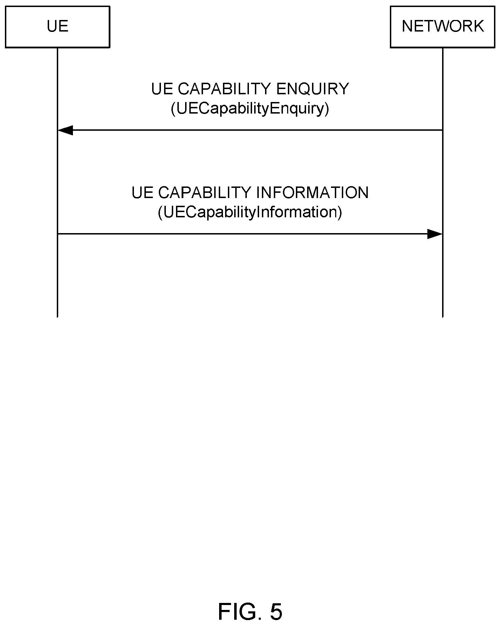

Therefore, before the UE reports the UE capability information of its own terminal, the network may notify the UE of information regarding communication conditions (for example, a supported band or the like) used/supported in the network (or a communication system used by the network) (refer to Fig. 5). The UE may determine the content/value of the UE capability information (for example, UECapabilityInformation) reported to the network, on the basis of the information notified from the network.

The information notified from the network to the UE may be referred to as a UE capability query/UE capability enquiry (for example, UECapabilityEnquiry) or a UE capability request filter (for example, UE-CapabilityRequestFilter) .

That is, the network may notify the UE of information regarding the UE capability that needs to be reported (for example, a parameter and a parameter range) or information regarding the UE capability that does not need to be reported (for example, a parameter and a parameter range) in advance.

The UE capability enquiry (for example, UECapabilityEnquiry) information may be included in a predetermined message transmitted from the network to the UE. The predetermined message may be a DL-DCCH-message. The UE capability enquiry information may include information (for example, capabilityRequestFilter or UE-CapabilityRequestFilterNR) that the network requests the UE to filter the UE capability. The information requesting to filter the UE capability may include information (for example, CodebookParameterFilter) regarding filtering of codebook parameters corresponding to channel state information (CSI).

For example, the UE may report information regarding the CSI reporting as the capability information. To reduce an overhead of reporting the UE capability information regarding the CSI, it is conceivable to notify UE of the UE capability enquiry (for example, UECapabilityEnquiry) (or UE-capabilityRequestFilter and CodebookParameterFilter) from the network. The UE may limit a value of a parameter (or a CSI codebook parameter) of the CSI to be reported, on the basis of the notification from the network.

For example, the UE may limit a combination of parameters to be reported for each band (for example, triplets) or a combination of parameters to be reported for each BC, on the basis of information from the network (for example, UECapabilityEnquiry). As an example, a value of at least one element (or parameter) included in the triplets may be indicated by the UE capability enquiry (for example, UECapabilityEnquiry).

Further, the UE capability enquiry (for example, UECapabilityEnquiry) may indicate to the UE whether or not to report the UE capability of a CSI codebook for a plurality of CSI codebook types (UE capability of a concatenated CSI codebook). Alternatively, the UE capability enquiry (for example, UECapabilityEnquiry) may notify the UE whether or not the network configures a plurality of CSI codebook types at the same time.

In addition, when the UE capability of the concatenated CSI codebook is reported (or, when the network configures the plurality of CSI codebook types at the same time), information regarding a combination of CSI codebook types may be included in the UE capability enquiry (for example, UECapabilityEnquiry) to notify the UE.

Because the network grasps whether or not the network configures a plurality of CSI codebook types at the same time, reporting of the UE capability of the concatenated CSI codebook is not required when the plurality of CSI codebook types are not configured at the same time.

In this case, the network may notify the UE that it does not require reporting of the UE capability of the concatenated CSI codebook (or, the network does not configure the plurality of CSI codebook types at the same time.). The UE may report a value (for example, a value included in the triplets) corresponding to each CSI codebook type, assuming that the network does not simultaneously configure the plurality of CSI codebook types. As a result, the UE can report the UE capability for the CSI codebook without underreporting.

Note that the UE may perform control such that the UE autonomously determines and limits a reported value instead of limiting the reporting content (for example, a reported value) on the basis of the information (for example, the UE capability enquiry) notified from the network.

### <Configuration of CSI Codebook Type>

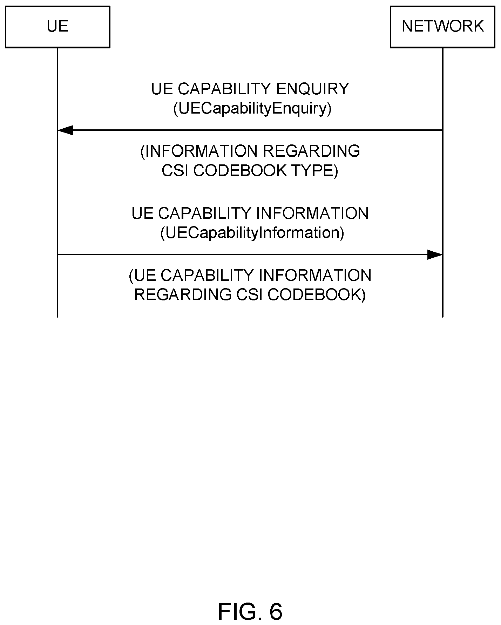

The network may notify the UE of information regarding the CSI codebook type configured using predetermined information (for example, the UE Capability Enquiry (UECapabilityEnquiry)) (refer to Fig. 6). The notified CSI codebook type may be one or more.

When the network notifies/configures one CSI codebook type, the UE may report the UE capability of a predetermined CSI codebook assuming only the notified CSI codebook type is configured independently (UE procedure #1-1). In this case, the UE may perform control such that reporting of the UE capability of the concatenated CSI codebook is not performed.

Alternatively, when the network notifies/configures one CSI codebook type, the UE may report the UE capability of a predetermined CSI codebook assuming that one or more CSI codebook types including at least the notified CSI codebook type may be configured at the same time (UE procedure #1-2). In this case, the UE may perform control such that reporting of the UE capability of the concatenated CSI codebook is performed.

Note that the UE capability of the predetermined CSI codebook may be the UE capability of the CSI codebook for the notified CSI codebook type, or may include the UE capability of CSI codebooks corresponding to a plurality of codebook types including at least the notified CSI codebook type.

When the network notifies/configures a plurality of CSI codebook types, the UE may report the UE capability of a predetermined CSI codebook assuming that the advertised CSI codebook types are configured independently (UE procedure #2-1). In this case, the UE may perform control such that reporting of the UE capability of the concatenated CSI codebook is not performed.

Alternatively, when the network notifies/configures a plurality of CSI codebook types, the UE may report the UE capability of a predetermined CSI codebook assuming that the plurality of notified CSI codebook types are configured simultaneously (UE procedure #2-2). In this case, the UE may perform control such that reporting of the UE capability of the concatenated CSI codebook is performed. In addition, when the concatenated CSI codebook is reported, the UE may consider only a combination of notified CSI codebook types and report the UE capability corresponding to the combination.

When the network notifies/configures a plurality of CSI codebook types, the UE may report the UE capability of a predetermined CSI codebook assuming that at least the notified CSI codebook type and other notified CSI codebook types or CSI codebook types not to be notified may be configured at the same time (UE procedure #2-3). In this case, the UE may perform control such that reporting of the UE capability of the concatenated CSI codebook is performed.

By notifying the UE of the information regarding the CSI codebook type that is configured by using the UE capability enquiry (for example, UECapabilityEnquiry)), the UE capability that the UE should report can be appropriately controlled.

### (Fourth Aspect)

In a fourth aspect, a case where, in a case of reporting a combination (for example, triplets) of a plurality of parameters by the UE, when a value of at least one element of the combination is smaller than (or equal to or smaller than) a value notified from the network, control is performed to report the combination will be described.

In the following description, as a combination/list of a plurality of parameters reported by the UE, a combination (for example, triplets) of the maximum number of transmission ports (for example, maxNumberTxPortsPerResource) per resource, the maximum number of resources (for example, maxNumberResourcePerBand) per band, and the total number of transmission ports (for example, totalNumberTxPortsPerBand) per band will be described as an example, but the present disclosure is not limited thereto. Two combinations of these three parameters may be reported.

In addition, in the following description, the UE capability reported for each band will be described as an example, but the UE capability reported for each BC/CSI type may also be applied.

The UE may limit a combination of parameters to be reported for each band (for example, triplets) or a combination of parameters to be reported for each BC, on the basis of information from the network (for example, UECapabilityEnquiry).

For example, the network may notify at least some values of CSI codebook parameters (for example, the number of transmission ports, the number of resources, and the like) as the UE capability enquiry, and the UE may perform control so as not to report UE capability information that exceeds the notified values. For example, when the network only supports a maximum of X ports, reporting of the UE capability information regarding the number of transmission ports exceeding X is not required for the network, so that reporting overheads can be suppressed by limiting the value reported by the UE.

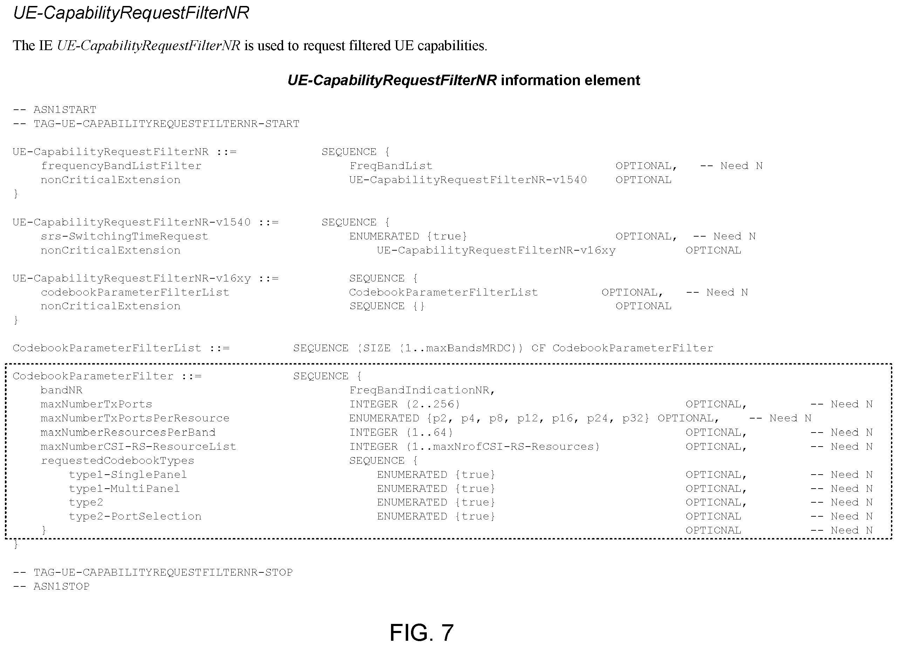

The network may notify the UE of the UE capability enquiry including information regarding the codebook parameters (for example, CodebookParameterFilter) (refer to Fig. 7). The CodebookParameterFilter may include at least one of information regarding the maximum number of transmission ports (for example, maxNumberTxPorts), information regarding the maximum number of transmission ports (for example, maxNumberTxPortsPerResource) per resource, or information regarding the maximum number of resources (for example, maxNumberResourcePerBand) per band.

Further, the CodebookParameterFilter may include information regarding the maximum number of CSI-RS resource lists (for example, maxNumberCSI-RS-ResourceList) and information regarding a requested codebook type (for example, requestedCodebookTypes).

The information regarding the maximum number of transmission ports (for example, maxNumberTxPorts) may be a filter that limits the value of the total number of transmission ports (for example, totalNumberTxPortsPerBand) per band included in the codebook parameters (refer to Fig. 7) reported by the UE.

The information regarding the maximum number of transmission ports per resource (for example, maxNumberTxPortsPerResource) may be a filter that limits the value of the maximum number of transmission ports per resource (for example, maxNumberTxPortsPerResource) included in the codebook parameters (refer to Fig. 7) reported by the UE.

The information regarding the maximum number of resources per band (for example, maxNumberResourcePerBand) may be a filter that limits the value of the maximum number of resources per band (maxNumberResourcePerBand) included in the codebook parameters (refer to Fig. 7) reported by the UE.

The information regarding the maximum number of CSI-RS resource lists (for example, maxNumberCSI-RS-ResourceList) may be a filter that limits the number of entries of the supported CSI-RS resource lists (for example, supportedCSI-RS-ResourceList) included in the codebook parameters (refer to Fig 7) reported by the UE.

The information regarding the requested codebook type (for example, the requestedCodebookTypes) may be a filter that limits a type included in the codebook parameters (refer to Fig. 7) reported by the UE.

When the UE receives the UE capability enquiry including the CodebookParameterFilter, the UE may perform control so as to report a value smaller than a value indicated by the CodebookParameterFilter, in the codebook parameters reported by the UE.

For example, when the CodebookParameterFilter includes information regarding the maximum number of transmission ports (for example, maxNumberTxPorts), the UE reports the codebook parameters including SupportedCSI-RS-Resource in which totalNumberTxPortsPerBand is smaller than a value notified by the CodebookParameterFilter (for example, maxNumberTxPorts).

Further, when the CodebookParameterFilter includes information regarding the maximum number of transmission ports (for example, maxNumberTxPortsPerResource) per resource, the UE reports the codebook parameters including SupportedCSI-RS-Resource in which maxNumberTxPortsPerResource is smaller than a value notified by the CodebookParameterFilter (for example, maxNumberTxPortsPerResource) .

Further, when the CodebookParameterFilter includes information regarding the maximum number of resources (for example, maxNumberResourcePerBand) per band, the UE reports the codebook parameters including SupportedCSI-RS-Resource in which maxNumberResourcePerBand is smaller than the value notified by the CodebookParameterFilter (for example, maxNumberResourcePerBand).

As described above, an assumed value (for example, the maximum value of the UE capability information) of the network may be notified to the UE for each parameter (for example, maxNumberTxPorts, maxNumberTxPortsPerResource, and maxNumberResourcePerBand), and the UE may control reporting so as not to exceed the notified value. As a result, it is possible to reduce reporting overheads of the UE.

The UE may control the presence or absence of reporting/value to be reported, on the basis of whether or not at least one of values of the respective elements of the triplets (maxNumberTxPortsPerResource, maxNumberResourcePerBand, and totalNumberTxPortsPerBand) is smaller than a given value notified from the network (or is equal to or smaller than the given value.). The given value notified from the network may be an upper limit/maximum value of each element reported by the UE.

When there is a parameter of which the given value is not notified from the network, the UE may perform control to report the combination.

The given value notified from the network may be notified by the UE capability enquiry (for example, UECapabilityEnquiry). The given value notified from the network may include at least one of a value regarding the maximum number of transmission ports (for example, maxNumberTxPorts), a value regarding the maximum number of transmission ports (for example, maxNumberTxPortsPerResource) per resource, or a value regarding the maximum number of resources (for example, maxNumberResourcePerBand) per band.

For example, it is assumed that the UE intends to report a plurality of triplets (for example, {16, 1, 16} and {8, 2, 12}) for a band A. Note that a value of each element of the triplets is an example, and the present disclosure is not limited thereto. Further, here, a case where the network notifies the given value corresponding to each of the three elements is illustrated, but the given value (reporting upper limit value/maximum value) may be notified for at least some of the elements.

Specifically, the UE intends to report each parameter for the band A as follows.

### <Triplet #1>

maxNumberTxPortsPerResource = 16
maxNumberResourcePerBand = 1
totalNumberTxPortsPerBand = 16

### <Triplet #2>

maxNumberTxPortsPerResource = 8
maxNumberResourcePerBand = 2
totalNumberTxPortsPerBand = 12

Here, it is assumed that the following values are notified as the UE capability enquiry (for example, UECapabilityEnquiry) or CodebookParameterFilter from the network.
maxNumberTxPortsPerResource = 10
maxNumberResourcePerBand = 2
maxNumberTxPorts (or totalNumberTxPortsPerBand) = 16

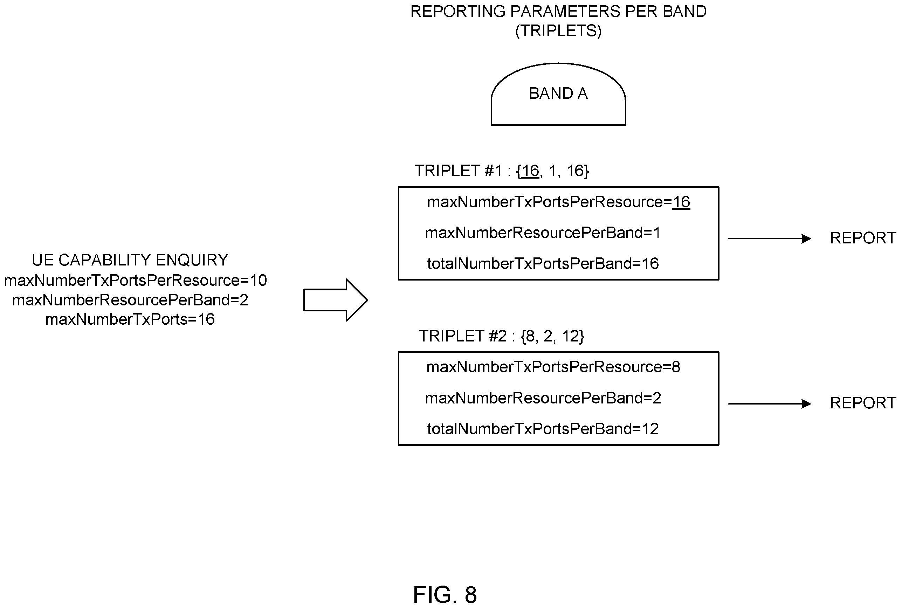

In such a case, the maximum number of transmission ports (maxNumberTxPortsPerResource) per resource in the triplets #1 is larger than the value notified from the network. On the other hand, values of the other parameters (maxNumberResourcePerBand and totalNumberTxPortsPerBand) in the triplets #1 are equal to or smaller than the values notified from the network (are not larger than the values). Therefore, the UE may be allowed to report both the triplets #1 {16, 1, 16} and the triplets #2 {8, 2, 12} (refer to Fig. 8).

From the network perspective, when the triplets #1 {16, 1, 16} are reported from the UE, it is possible to set the capability limit {10, 1, 16} of the network to the UE at the maximum.

As described above, even when some elements included in predetermined elements exceed the given value notified from the network, the UE may be allowed to report the exceeded value (or triplets including the exceeded value). As a result, from the viewpoint of the network, since values of some parameters included in the combination reported from the UE can be used (or set to the UE), the communication quality can be improved by reporting the combination to the network.

Note that, when the UE reports the triplets #1 in Fig. 8, the UE may perform reporting by correcting values of some parameters (for example, parameters whose values exceed the value notified from the network). For example, the UE may correct the maxNumberTxPortsPerResource in the triplets #1 to the value notified from the network and perform reporting (here, {10, 1, 16}).

In addition, a configuration in which all the elements of the predetermined elements (for example, the elements included in the triplets) are not allowed to be reported while values thereof exceed the given value notified from the network may be used.

For example, in a case of reporting (maxNumberTxPortsPerResource, maxNumberResourcePerBand, and totalNumberTxPortsPerBand), when the values of all the elements are larger than the given value notified from the network, the UE may apply at least one of the following UE procedures 1 to 4. When there is a parameter of which the given value is not notified from the network, the parameter may be excluded.

### <UE Procedure 1>

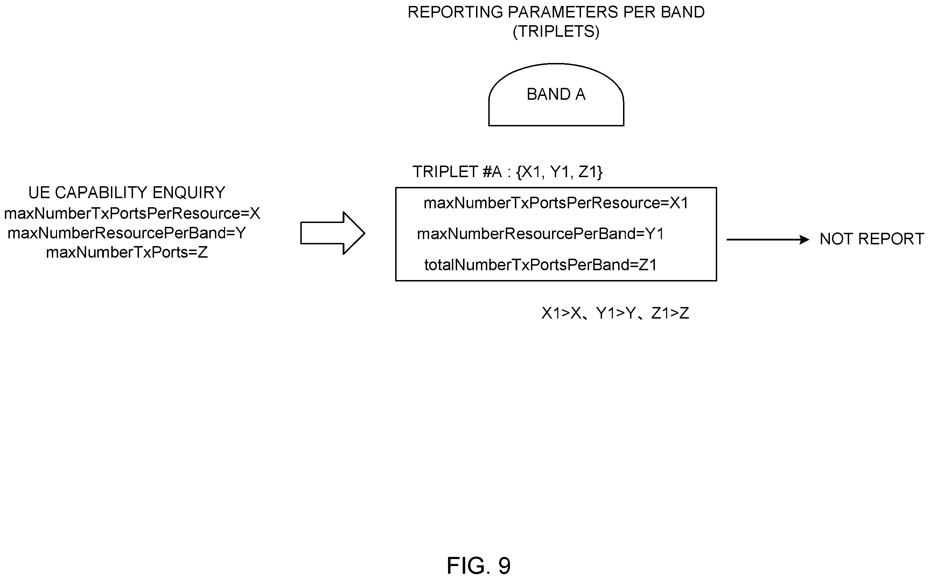

When values (for example, X₁, Y₁, and Z₁) of all parameters included in a combination (for example, triplets #A) scheduled to be reported are larger than values (for example, X, Y, and Z) notified from the network (for example, X₁ > X, Y₁ > Y, and Z₁ > Z), the UE may perform control so as not to report the combination (refer to Fig. 9). In this case, from the viewpoint of the network, the values of all the parameters included in the combination scheduled to be reported cannot be used. Therefore, by performing control so as not to report the combination, it is possible to suppress an increase in reporting overheads of the UE.

### <UE Procedure 2>

When the values of all the parameters included in the combination (for example, the triplets) scheduled to be reported are larger than the values notified from the network, the UE may be configured not to be required to report the combination (or not to be expected). In this case, depending on the implementation of the UE, the combination may be allowed to be reported.

### <UE Procedure 3>

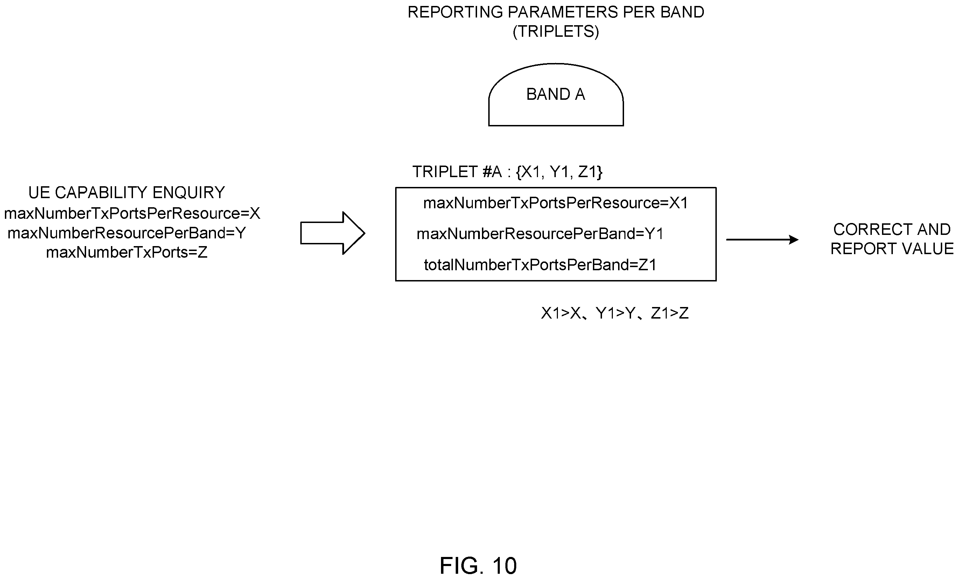

When the values (for example, X₁, Y₁, and Z₁) of all the parameters included in the combination (for example, the triplet #A) scheduled to be reported are larger than the values (for example, X, Y, and Z) notified from the network (for example, X₁ > X, Y₁ > Y, and Z₁ > Z), the UE may correct the values of the respective parameters included in the combination and report the corrected values (refer to Fig. 10). For example, the UE may correct the values of the respective parameters included in the combination to values that do not exceed the values notified from the network. The UE may correct the values of all the parameters included in the combination, or may correct only the values of some parameters.

As a result, the network can configure the number of resources/the number of transmission ports by using the values of the parameters included in the combination reported from the UE.

### <UE Procedure 4>

When the values of all the parameters included in the combination (for example, the triplets) scheduled to be reported are larger than the values notified from the network, the UE may not report the combination and may report the fact (that the values of all the parameters included in the combination exceed the values notified from the network) to the network. In this case, since the UE may notify the network of the fact using a small number of bits (for example, 1 bit), an increase in reporting overheads of the UE can be suppressed.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

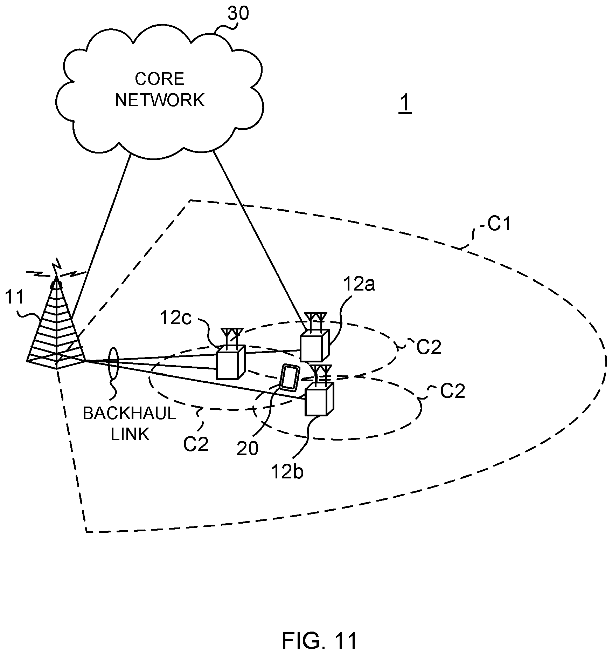

Fig. 11 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP) .

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)) .

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) or dual connectivity (DC).

Each CC may be included in at least one of a first frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

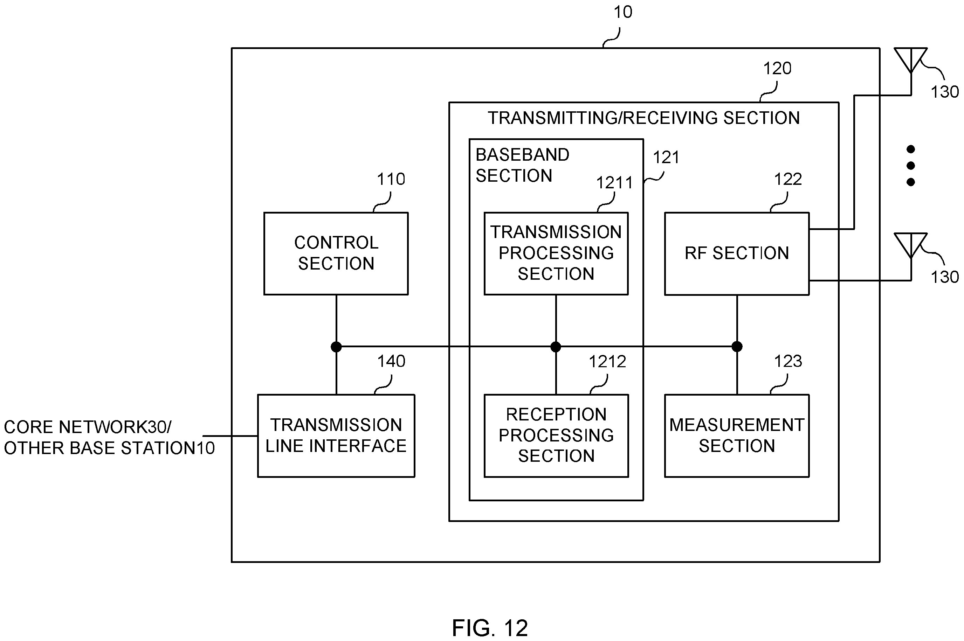

Fig. 12 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam (Tx beam) or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a base band signal.

The transmitting/receiving section 120 (RF section 122) may perform modulation to a radio frequency range, filtering processing, amplification, and the like on the base band signal, to transmit a signal in the radio frequency range via the transmission/reception antenna 130.

Meanwhile, the transmitting/receiving section 120 (RF section 122) may perform amplification, filtering processing, demodulation to a base band signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

The transmitting/receiving section 120 may transmit information regarding reporting of channel state information (CSI) codebook types.

The control section 110 may control reception of terminal capability information including a first terminal capability for each CSI codebook type and a second terminal capability for a combination of the CSI codebook types.

### (User Terminal)

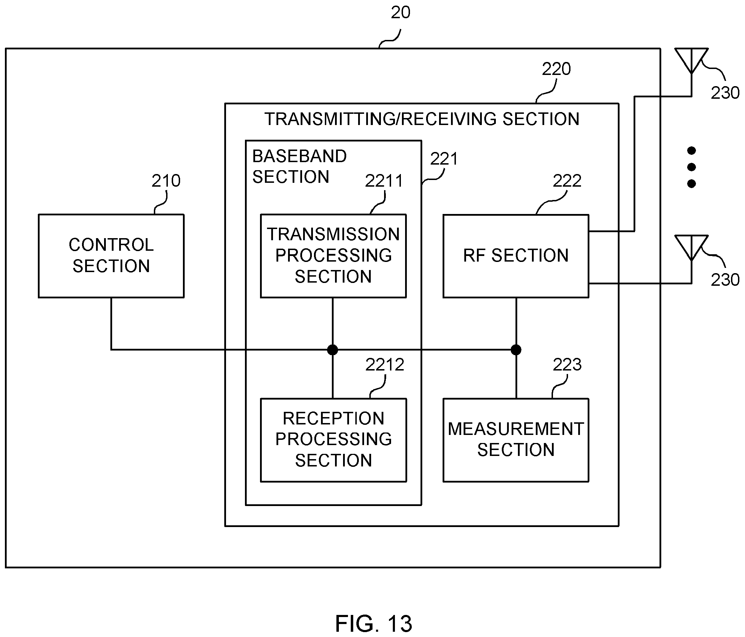

Fig. 13 is a diagram illustrating an example of a configuration of the user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam (Tx beam) or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a base band signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the base band signal, and may transmit a signal in the radio frequency range via the transmission/reception antenna 230.

Meanwhile, the transmitting/receiving section 220 (RF section 222) may perform amplification, filtering processing, demodulation to a base band signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 220 (measurement section 223) may perform measurement on the received signal. For example, the measurement section 223 may perform RRM measurement, CSI measurement, and the like on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 or the transmission/reception antenna 230.

When a plurality of channel state information (CSI) codebook types are supported, the transmitting/receiving section 220 may transmit a first terminal capability for each CSI codebook type and a second terminal capability for a combination of the CSI codebook types. In addition, the transmitting/receiving section 220 may receive at least one of information regarding presence or absence of reporting of the second terminal capability for the combination of the CSI codebook types or information regarding the combination of the CSI codebook types.

In a case of supporting at least a plurality of channel state information (CSI) codebook types, the control section 210 may control reporting of the first terminal capability for each CSI codebook type and the second terminal capability for the combination of the CSI codebook types.

For example, the control section 210 may select two or more CSI codebook types that are simultaneously configured in a certain time unit as the combination of the CSI codebook types. In addition, the control section 210 may perform control to report the terminal capability in a case where each CSI codebook type is independently configured as the first terminal capability for each CSI codebook type.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional block may be implemented by combining the one or the plural apparatuses with software.

Here, functions include, but are not limited to, determining, determining, judging, computing, calculating, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning. For example, a functional block (component) that has a transmission function may be referred to as a transmitting section (transmitting unit), a transmitter, and the like. In any case, as described above, the implementation method is not particularly limited.

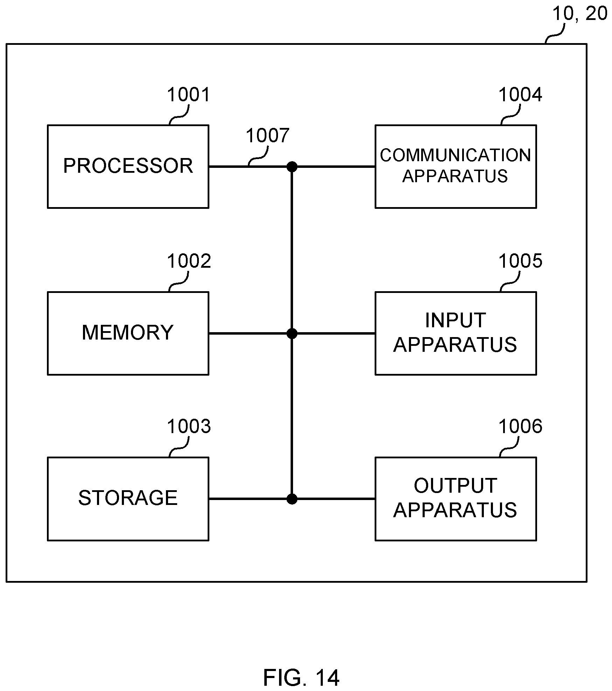

For example, the base station, the user terminal, and so on according to one embodiment of the present disclosure may function as a computer that executes the processing of the radio communication method of the present disclosure. Fig. 14 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, or a unit can be replaced with each other. The hardware configuration of the base station 10 and the user terminal 20 may be configured including one or a plurality of the apparatuses illustrated in the drawings, or may be configured without including some apparatuses.

For example, although only one processor 1001 is illustrated, there may be a plurality of processors. Further, the processing may be executed by one processor, or the processing may be executed by two or more processors simultaneously or sequentially, or by using other methods. Note that, the processor 1001 may be implemented with one or more chips.

For example, each function of the base station 10 and the user terminal 20 is implemented by causing predetermined software (program) to be read onto hardware such as the processor 1001 and the memory 1002, and by the processor 1001 performing arithmetic operation to control communication via the communication apparatus 1004 and control at least one of reading or writing of data in the memory 1002 and the storage 1003.

The processor 1001 controls the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads a program (program code), a software module, data, and the like from at least one of the storage 1003 or the communication apparatus 1004 into the memory 1002, and executes various types of processing in accordance with these. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 may store a program (program code), a software module, and the like executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmitting/receiving device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, apparatuses such as the processor 1001 and the memory 1002 are connected to each other by the bus 1007 for communicating information. The bus 1007 may be formed by using a single bus, or may be formed by using different buses for respective connections between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in a time domain. Each of the one or more periods (frames) included in the radio frame may be referred to as a subframe. Further, the subframe may include one or more slots in the time domain. The subframe may have a fixed time length (for example, 1 ms) that does not depend on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as a PDSCH (PUSCH) mapping type B.

The radio frame, subframe, slot, mini slot, and symbol all represent a time unit when transmitting a signal. The radio frame, the subframe, the slot, the mini slot, and the symbol may be called by other applicable names, respectively. Note that, the time units such as the frame, subframe, slot, mini slot, and symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that, the unit indicating the TTI may be referred to as the slot, mini slot, and the like instead of the subframe.

Here, the TTI refers to, for example, the minimum time unit of scheduling in the radio communication. For example, in the LTE system, a base station performs scheduling to allocate radio resources (a frequency bandwidth, transmission power, and the like that can be used in each user terminal) to each user terminal in TTI units. Note that, definition of the TTI is not limited to this.

The TTI may be a transmission time unit of channel coded data packet (transport block), code block, codeword, and the like, or may be a processing unit of scheduling, link adaptation, and the like. Note that, when the TTI is given, a time interval (for example, the number of symbols) to which the transport block, code block, codeword, and the like are actually mapped may be shorter than the TTI.

Note that, when one slot or one mini slot is referred to as the TTI, one or more TTIs (that is, one or more slots or one or more mini slots) may be the minimum time unit of scheduling. Furthermore, the number of slots (the number of mini slots) forming the minimum time unit of the scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that, the long TTI (for example, the usual TTI, subframe, and the like) may be replaced with a TTI having a time length longer than 1 ms, and the short TTI (for example, the shortened TTI and the like) may be replaced with a TTI having a TTI length shorter than the TTI length of the long TTI and not shorter than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Furthermore, the RB may include one or more symbols in the time domain, and have the length of one slot, one mini slot, one subframe, or one TTI. One TTI, one subframe, and the like may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and numbered within the BWP.

The BWP may include a BWP for UL (UL BWP) and a BWP for DL (DL BWP). For the UE, one or more BWPs may be configured within one carrier.

At least one of the configured BWPs may be active, and it is not necessary to assume that the UE transmits and receives a predetermined signal/channel outside the active BWP. Note that, a "cell", a "carrier", and the like in the present disclosure may be replaced with a BWP.

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information, parameters, and the like described in the present disclosure may be represented using absolute values, represented using relative values with respect to given values, or represented using other corresponding information. For example, the radio resource may be indicated by a predetermined index.

The names used for the parameters and the like in the present disclosure are not limited names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented using any of various different technologies. For example, the data, instruction, command, information, signal, bit, symbol, chip, and the like that may be referred to throughout the above description may be represented by the voltage, current, electromagnetic wave, magnetic field or magnetic particle, optical field or photon, or any combination thereof.

Furthermore, the information, signals, and the like may be output in at least one of a direction from a higher layer to a lower layer or a direction from the lower layer to the higher layer. The information, signals, and the like may be input and output via a plurality of network nodes.

The information, signals, and the like that are input and output may be stored in a specific location (for example, in a memory), or may be managed using a management table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Furthermore, notification of predetermined information (for example, notification of "being X") does not necessarily have to be explicit, and may be given implicitly (for example, by not giving notification of the predetermined information or by notification of other information).

Judging may be performed by a one-bit value (0 or 1), by a Boolean indicated by true or false, or by comparison of numerical values (for example, comparison with a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Also, software, instructions, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, a reception apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with a base station. In this case, the base station 10 may have the function of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

Each aspect/embodiment described in the present disclosure may be used alone, used in a combination, and switched in association with execution. Further, the order of processing procedures, sequences, flowcharts, and the like of the aspects/embodiments described in the present disclosure may be re-ordered as long as there is no inconsistency. For example, regarding the method described in the present disclosure, elements of various steps are presented using an exemplary order, and the order is not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The term "on the basis of" used in the present disclosure does not mean "only on the basis of" unless otherwise specified. In other words, the term "on the basis of" means both "only on the basis of" and "at least on the basis of".

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a certain operation.

Furthermore, "determining" may be replaced with "assuming", "expecting", "considering", and the like.

As used in the present disclosure, the terms "connected" and "coupled," or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy, such as electromagnetic energy having wavelengths in the radio frequency, microwave, and optical (both visible and invisible) domains.

In the present disclosure, the phrase "A and B are different" may mean "A and B are different from each other." Note that the phrase may mean that "A and B are different from C". Terms such as "leave", "coupled", or the like may also be interpreted in the same manner as "different".

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a control section that, when a plurality of channel state information (CSI) codebook types are supported, controls reporting of a first terminal capability for each CSI codebook type and a second terminal capability for a combination of the CSI codebook types; and
a transmitting section that transmits terminal capability information including the first terminal capability and the second terminal capability.

2. The terminal according to claim 1, wherein the control section selects two or more CSI codebook types that are simultaneously configured in a certain time unit as the combination of the CSI codebook types.

3. The terminal according to claim 1 or 2, wherein the control section performs control to report, as the first terminal capability for each CSI codebook type, a terminal capability when each CSI codebook type is independently configured.

4. The terminal according to any one of claims 1 to 3, further comprising: a receiving section that receives at least one of information regarding presence or absence of reporting of the second terminal capability for the combination of the CSI codebook types, and information regarding the combination of the CSI codebook types.

5. A radio communication method comprising:
when a plurality of channel state information (CSI) codebook types are supported, controlling reporting of a first terminal capability for each CSI codebook type and a second terminal capability for a combination of the CSI codebook types; and
transmitting terminal capability information including the first terminal capability and the second terminal capability.

6. A base station comprising:
a transmitting section that transmits information regarding reporting of channel state information (CSI) codebook types; and
a control section that controls reception of terminal capability information including a first terminal capability for each CSI codebook type and a second terminal capability for a combination of the CSI codebook types.
